# EUROPEAN PATENT APPLICATION

(11) **EP 0 939 505 A2**
(43) Date of publication of application: **01.09.1999**
(21) Application number: 99102801.0
(22) Date of filing: 25.02.1999
(51) Int. Cl.: H04B 10/17

(54) **Light source module and optical amplifier using this light source module**

(30) Priority: 25.02.1998 JP 4270698
(71) Applicant: NEC CORPORATION, Tokyo (JP)
(72) Inventor: Fujita, Masayuki, Minato-ku, Tokyo (JP)
(74) Representative: VOSSIUS & PARTNER

(57) **Abstract**

A light source module and an optical amplifier used the light source module which prevents an internal optical oscillation being an unstable cause by making the reflection factor for the light of the same wavelength band as the signal light to be amplified low, at the optical amplification used a rare-earth doped optical fiber. The light of the signal light band to be amplified except a pumping light inputted from an optical fiber is reflected by an optical filter film coated at the end face of the optical fiber. The end face of the optical fiber is polished on a slant, therefore this reflected light becomes an emission mode and is emitted to the outside of the core of the optical fiber. Therefore, the reflection factor of the light of the signal light band to be amplified except the pumping light inputted from the optical fiber in the inside of the core of the optical fiber becomes much lower than the case that the optical fiber is simply polished on a slant and the inputting light to the rare-earth doped optical fiber becomes only the pumping light substantially and the stable amplification is able to be implemented.

## Description

The present invention relates to a light source module and an optical amplifier used the light source module which in particular are used by the optical communication and the optical information processing.

At a long distance optical fiber communication system, an optical relay which amplifies signal light attenuated in the optical fiber being a transmission line is needed. As an optical relay, there is an optical fiber amplifier which directly amplifies light using a rare-earth doped optical fiber as one of the amplification media. This optical fiber amplifier has a pumping light source module making the rare-earth doped optical fiber pump to implement the optical amplification. This outputted pumping light at the pumping light source module and signal light to be amplified are multiplexed at a WDM (wavelength division multiplexer) and transmit to the rare-earth doped optical fiber. This system is called the forward pumping scheme.

And there is the other scheme called the backward pumping scheme. This scheme is that the signal light to be amplified is inputted from the one end of the rare-earth doped optical fiber and the pumping light source module is connected at the other end of the rare-earth doped optical fiber via a WDM and the amplified signal light is outputted via this WDM.

In order to implement the stable amplification by the rare-earth doped optical fiber, from the viewpoint of the rare-earth doped optical fiber, the reflection factor of optical components connected to the input part and output part of this rare-earth doped optical fiber for the light of the same wavelength band as the signal light to be amplified must be made low. When this reflection factor becomes large, the oscillating operation begins at the inside of the rare-earth doped optical fiber and the amplifying operation may become unstable. Therefore, at the pumping light source module, the reflection factor considered the inside of the pumping light source module from the long distant end of the optical fiber also must be made low.

As the conventional pumping light source module, there are some technologies that the end part of the optical fiber is polished on a slant and the reflection of the end part of the optical fiber is made low, and the light to be amplified is reflected between the end of the optical fiber and the pumping light source element, and the optical filter which makes the pumping light penetrate is inserted on a slant to the light axis, and so on.

At the pumping light source module which has the structure polished the end of the optical fiber on a slant, there is a problem that the reflection of the pumping light source element at the end face is not able to be avoided. As the method to avoid the reflection of the end face of the pumping light source, by the method to insert an optical isolator between the end of the optical fiber and the pumping light source element, and as mentioned above, by the method to insert the optical filter film which reflects the light to be amplified, the loss of the optical isolator which works at 980 nm band light being one of the main pumping wavelength of Er (erbium) doped optical fiber used in general is a few dB and it is difficult to transmit sufficient pumping light power to the optical fiber.

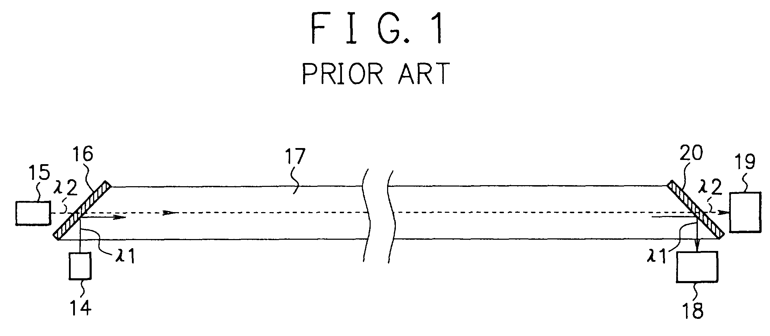

Fig. 1 is a block diagram showing the construction of the conventional optical fiber for the optical multiplex transmission. The Japanese Patent Application Laid-Open No. SHO 57-68940 discloses the structure of the optical fiber for the optical multiplex transmission shown in Fig. 1. As shown in Fig. 1, an optical fiber 17 transmits the light of the plural wavelength and the both ends of the optical fiber 17 have the slant shape of the angle 45° for the light axis respectively and the surfaces are polished. On the surfaces of this slant shape, interference filter films 16 and 20 are provided and the light of the wavelength λ1 is reflected all and the light of the wavelength λ2 is penetrated. With this structure, the one side of the optical fiber 17 becomes a transmitting part and the other side becomes a receiving part.

At the transmitting part, a luminous element 14 generating the light of the wavelength λ1 is provided at right angle to the light axis of the optical fiber 17 and a luminous element 15 generating the light of the wavelength λ2 is provided on a parallel with the light axis of the optical fiber 17. At the receiving part, a light receiving element 18 receiving the light of the wavelength λ1 reflected all by the interference filter film 20 is provided at right angle to the light axis of the optical fiber 17 and a light receiving element 19 receiving the light of the wavelength λ2 penetrating the interference filter film 20 is provided on a parallel with the light axis of the optical fiber 17.

The light of the wavelength λ1 generated by the luminance element 14 is reflected all by the interference filter film 16 and is transmitted to the optical fiber 17. The light of the wavelength λ2 generated by the luminance element 15 penetrates the interference filter film 16 and is transmitted to the optical fiber 17. That is, the both light are multiplexed. Within the light transmitted in the optical fiber 17, the light of the wavelength λ1 is reflected all by the interference filter film 20 and reaches the light receiving element 18 and the light of the wavelength λ2 penetrates the interference filter film 20 and reaches the light receiving element 19. With this, the both light is separated.

In the technology of this Japanese Patent Application, only the structure of the optical fiber for the optical multiplex transmission is disclosed and the above mentioned problem at the optical amplifier used the rare-earth doped optical fiber has not been solved yet.

It is therefore an object of the present invention to provide a light source module and an optical amplifier used the light source module which makes the reflection factor for the light of the same wavelength band as the signal light to be amplified low and prevents an internal oscillation being an unstable cause for amplifying operation, at the optical amplification used the rare-earth doped optical fiber.

According to a first aspect of the present invention, for achieving the above mentioned objects, a light source module provides a light source element which outputs the light of the pumping wavelength of a rare-earth doped optical fiber, an optical fiber whose one end face receiving the outputted light from said light source element is shaped into a slant, and an optical filter film which makes the outputted light from said light source element provided at said one end face of said optical fiber penetrate and makes the light of the amplification band wavelength of said rare-earth doped optical fiber reflect.

According to a second aspect of the present invention, in the first aspect, said rare-earth doped optical fiber is an Er (erbium) doped optical fiber, said pumping wavelength is 1480 nm band and said amplification band wavelength is 1550 nm band.

According to a third aspect of the present invention, in the first aspect, said rare-earth doped optical fiber is an Er doped optical fiber, said pumping wavelength is 980 nm band and said amplification band wavelength is 1550 nm band.

According to a fourth aspect of the present invention, in the first aspect, said rare-earth doped optical fiber is a Pr (praseodymium) doped optical fiber, said pumping wavelength is 1016 nm band and said amplification band wavelength is 1300 nm band.

According to a fifth aspect of the present invention, an optical amplifier which supplies the pumping light to a rare-earth doped optical fiber and amplifies an inputted signal light provides a light source element which outputs the light of the pumping wavelength of said rare-earth doped optical fiber, an optical fiber for pumping whose one end face receiving the outputted light from said light source element is shaped into a slant, an optical filter film which makes the outputted light from said light source element provided at said one end face of said optical fiber for pumping penetrate and makes the light of the wavelength of said inputted signal light reflect, and an optical coupler which transmits the pumping light from the other end face of said optical fiber for pumping to said rare-earth doped optical fiber.

According to a sixth aspect of the present invention, in the fifth aspect, said optical coupler is provided at the input end of said rare-earth doped optical fiber and is constituted to multiplex said inputted signal light and said pumping light.

According to a seventh aspect of the present invention, in the fifth aspect, said optical coupler is provided at the output end of said rare-earth doped optical fiber and is constituted to separate said inputted signal light and said pumping light.

At the present invention, the light of the signal light band to be amplified except a pumping light inputted from an optical fiber is reflected by an optical filter film coated at the end face of the optical fiber. The end face of the optical fiber is polished on a slant, therefore this reflected light becomes an emission mode and is emitted to the outside of the core of the optical fiber. Therefore, the reflection factor of the light of the signal light band to be amplified except the pumping light inputted from the optical fiber in the inside of the core of the optical fiber becomes lower than the case that the optical fiber is simply polished on a slant, and the inputting light to the rare-earth doped optical fiber becomes only the pumping light substantially and the stable amplification is able to be implemented. This light is reflected to the outside of the core at the end face of the optical fiber and does not reach the light source element of the pumping light, therefore the influence of reflection at the end face of the light source element is also avoided.

The objects and features of the present invention will become more apparent from the consideration of the following detailed description taken in conjunction with the accompanying drawings in which:
Fig. 1 is a block diagram showing the construction of the conventional optical fiber for the optical multiplex transmission;
Fig. 2 is a block diagram showing an embodiment of a light source module of the present invention.
Fig. 3 is a structural diagram applying the light source module shown in Fig. 2 for an optical amplifier of the rare-earth doped optical fiber.

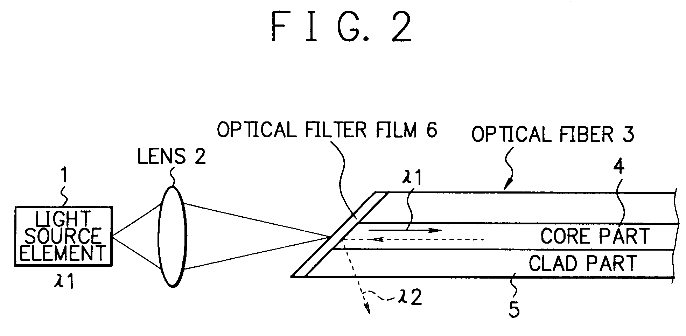

Referring now to the drawings, embodiments of the present invention are explained in detail. Fig. 2 is a block diagram showing an embodiment of the present invention. In Fig. 2, a light source element 1 generating pumping light for a rare-earth doped optical fiber generates the pumping light of the wavelength λ1, in this, the rare-earth doped optical fiber is not shown in Fig. 2. This pumping light is condensed at a lens 2 and the incidence of this pumping light to the end face of a single mode optical fiber 3 is implemented. The end face of the single mode optical fiber 3 is polished on a slant at about angle of for example 8° for the axis normal line of a core part 4.

On this polished surface, an optical filter film 6 is coated. The pumping light of the wavelength λ1 from the light source element 1 penetrates this optical filter film 6 and the light of the amplifying wavelength band λ2 of the rare-earth doped optical fiber is reflected. A dielectric multilayer film is able to be formed as this optical filter film 6 by the method such as the vapor evaporation. A clad part 5 covers the core part 4.

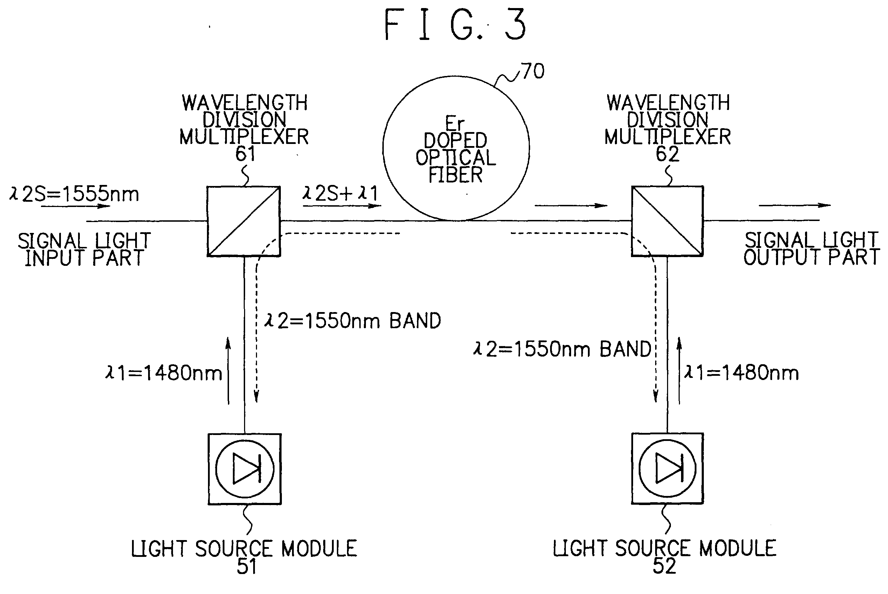

Fig. 3 is a structural diagram applying the light source module shown in Fig. 2 for an optical amplifier of the rare-earth doped optical fiber. Referring to Figs. 2 and 3, an embodiment of the optical amplifier of the present invention is explained. In Fig. 3, light source modules 51 and 52 are the light source modules of the present invention shown in Fig. 2. At this example, the wavelength λ2S = 1555 nm is used as a signal light to be amplified and an Er (erbium) doped optical fiber is used as a rare-earth doped optical fiber 70. In this case, the wavelength λ1 of the pumping light is 1480 nm, therefore the wavelength λ1 of the light source element 1 (in Fig. 2) of the both light source modules 51 and 52 is set to be 1480 nm.

The signal light to be amplified of the wavelength λ2S = 1555 nm inputted from the signal light input part and the pumping light from the light source module 51 are multiplexed at a WDM (wavelength division multiplexer) 61 and transmitted to the Er doped optical fiber 70. The pumping light from the light source module 52 is transmitted to the Er doped optical fiber 70 via a WDM 62. At the inside of the Er doped optical fiber 70, using the energy of the pumping light of the wavelength λ1 from the light source modules 51 and 52, the signal light to be amplified of the wavelength λ2S is amplified and outputted.

At this time, in the inside of the Er doped optical fiber 70, ASE (amplitude spontaneous emission) light of the wavelength λ2 = 1550 nm band is generated and inputted to the inside of the light source modules 51 and 52. When this ASE light is reflected in the light source modules 51 and 52 and is inputted to the Er doped optical fiber 70 again, the optical oscillation is generated in the inside of this Er doped optical fiber 70. However, as shown in Fig. 2, at the light source modules 51 and 52, the ASE light of the wavelength λ2 = 1550 nm band is reflected by the optical filter film 6 on the end face of the optical fiber 3 and emitted to the outside of the optical fiber 3 and is not inputted to the Er doped optical fiber 70 (in Fig. 3) again. Therefore, the optical oscillation at the inside of the Er doped optical fiber 70 is able to be avoided.

As a light source element 1 in Fig. 2, a semiconductor laser element outputting the light of the wavelength of 980 nm being the other main pumping wavelength of the Er doped optical fiber is able to be used. In this case, at the end face of the optical fiber 3, the optical filter film 6 at which the light of the wavelength 980 nm is penetrated and the light of the wavelength 1550 nm band is reflected is coated.

Moreover, a semiconductor laser element outputting the light of the wavelength of 1016 nm being the pumping wavelength of the Pr (praseodymium) doped optical fiber is able to be used for the light source element 1. In this case, at the end face of the optical fiber 3, the optical filter film 6 at which the light of the wavelength 1016 nm is penetrated and the light of the wavelength 1300 nm band being the amplification wayelength of the Pr doped optical fiber is reflected is coated.

In the structure of Fig. 3, the case that the light source modules 51 and 52 are provided at the both input side and output side of the Er doped optical fiber 70 and the both forward pumping scheme and backward pumping scheme are applied is shown. However the case using either the forward pumping scheme or the backward pumping scheme is used is also applicable. The angle of inclination of the end face of the optical fiber 3 is set to be the angle needed to emit the light reflected at the end face of the optical fiber to the outside. This angle is different among the kinds of optical fibers used, therefore this angle is set to be a sufficient angle to emit surely the reflected light at the end face of the optical fiber to the outside of the core part 4.

As mentioned above, according to the present invention, the light of the different wavelength from the light of the wavelength of the light source inputted to the optical fiber is surely reflected at the end face of the optical fiber and emitted to the outside of the optical fiber, therefore this reflected light is not inputted again to the rare-earth doped optical fiber and the optical amplification is able to be stably implemented.

Moreover, optical elements, such as an optical filter, an optical isolator and so forth are not needed to be inserted between the optical fiber and the light source element, therefore total optical system is simplified, and the optical amplifier used the light source module being low cost and small sized is able to be obtained.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A light source module, comprising:
a light source element which outputs the light of the pumping wavelength of a rare-earth doped optical fiber;
an optical fiber whose one end face receiving the outputted light from said light source element is shaped into a slant; and
an optical filter film which makes the outputted light from said light source element provided at said one end face of said optical fiber penetrate and makes the light of the amplification band wavelength of said rare-earth doped optical fiber reflect.

2. A light source module in accordance with claim 1, wherein:
said rare-earth doped optical fiber is an Er (erbium) doped optical fiber, said pumping wavelength is 1480 nm band and said amplification band wavelength is 1550 nm band.

3. A light source module in accordance with claim 1, wherein:
said rare-earth doped optical fiber is an Er doped optical fiber, said pumping wavelength is 980 nm band and said amplification band wavelength is 1550 nm band.

4. A light source module in accordance with claim 1, wherein:
said rare-earth doped optical fiber is a Pr (praseodymium) doped optical fiber, said pumping wavelength is 1016 nm band and said amplification band wavelength is 1300 nm band.

5. An optical amplifier which supplies the pumping light to a rare-earth doped optical fiber and amplifies an inputted signal light, comprising:
a light source element which outputs the light of the pumping wavelength of said rare-earth doped optical fiber;
an optical fiber for pumping whose one end face receiving the outputted light from said light source element is shaped into a slant;
an optical filter film which makes the outputted light from said light source element provided at said one end face of said optical fiber for pumping penetrate and makes the light of the wavelength of said inputted signal light reflect; and
an optical coupler which transmits the pumping light from the other end face of said optical fiber for pumping to said rare-earth doped optical fiber.

6. An optical amplifier in accordance with claim 5, wherein:
said optical coupler is provided at the input end of said rare-earth doped optical fiber and is constituted to multiplex said inputted signal light and said pumping light.

7. An optical amplifier in accordance with claim 5, wherein:
said optical coupler is provided at the output end of said rare-earth doped optical fiber and is constituted to separate said inputted signal light and said pumping light.

8. An optical amplifier in accordance with claim 6, wherein:
said optical coupler is provided at the output end of said rare-earth doped optical fiber and is constituted to separate said inputted signal light and said pumping light.
